# EUROPEAN PATENT SPECIFICATION

(11) **EP 0 368 413 B1**
(45) Date of publication and mention of the grant of the patent: **05.06.1996**
(21) Application number: 89202806.9
(22) Date of filing: 07.11.1989
(51) Int. Cl.: C08L 81/02, C08L 71/12

(54) **Polyphenylene sulfide resin composition**
Polyphenylensulfidharz-Zusammensetzung
Composition de résine polyphénylènesulfide

(30) Priority: 08.11.1988 JP 280340/88; 23.02.1989 JP 41649/89; 27.02.1989 JP 43200/89; 28.02.1989 JP 45489/89; 10.05.1989 JP 115173/89; 24.05.1989 JP 128943/89; 24.07.1989 JP 188883/89; 31.07.1989 JP 198726/89; 10.08.1989 JP 205620/89
(43) Date of publication of application: 16.05.1990
(60) Divisional application: 95201490.0
(73) Proprietor: GE PLASTICS JAPAN LIMITED, Chuo-ku Tokyo (JP)
(72) Inventor: Inoue, Kazunari, Utsunomiya City Tochigi Prefecture (JP); Saito, Akihiro, Utsunomiya City Tochigi Prefecture (JP); Morioka, Masataka, Moka City Tochigi Prefecture (JP)
(74) Representative: Smulders, Theodorus A.H.J., Ir.

(56) References cited:
- EP-A- 0 104 543
- EP-A- 0 182 163
- EP-A- 0 275 991
- EP-A- 0 286 257
- EP-A- 0 319 300
- EP-A- 0 341 421
- EP-A- 0 341 422
- EP-A- 0 360 544

## Description

### Field of the Invention

The present invention relates to a polyphenylene sulfide resin composition, particularly such a resin composition having improved brittleness to impact and good appearance and heat resistance.

### Background of the Invention

Polyphenylene sulfide has good resistance to heat, flame and chemicals and high rigidity, and is a very useful resin as an engineering plastic. However, it also has a drawback that it is weak to impact. Accordingly, there were proposed resin compositions in which excellent properties of polyphenylene sulfide are utilized or its drawbacks are improved. For instance, Japanese Patent Application Laid-Open No. 156561/75 discloses a resin composition comprising polyphenylene ether and polyphenylene sulfide in which polyphenylene sulfide is added to improve moldability and fire-resistant of polyphenylene ether.

Japanese Patent Application Laid-Open No. 69255/78 discloses a polyphenylene sulfide resin composition containing polyphenylene sulfide and polyamide. This intends to improve brittleness of polyphenylene sulfide.

Further, Japanese Patent Application Laid-Open No 213758/84 proposes a resin composition in which a polyamide resin and an epoxy resin are admixed to a blend of polyphenylene sulfide and polyphenylene ether in order to improve compatibility between polyphenylene sulfide and polyphenylene ether.

If polyphenylene ether and polyamide are blended to polyphenylene sulfide to improve brittleness of polyphenylene sulfide, the resin composition obtained by simple mixing is brittle and has poor appearance, because polyphenylene sulfide and polyphenylene ether are less compatible with each other. When polyamide is admixed to polyphenylene sulfide, compatibility between polyphenylene sulfide and polyamide is insufficient, so that improvement of brittleness of polyphenylene sulfide is insufficient and a new problem, delamination, is furthermore caused. In the case where compatibility between polyphenylene sulfide and polyphenylene ether is improved by addition of polyamide and an epoxy resin, chemical reaction of the epoxy resin with the polyamide and the polyphenylene sulfide takes place, which results in a problem of unstable melt flow properties.

### The Brief Description of the Invention

The purpose of the present invention is to provide a polyphenylene sulfide resin composition in which polyphenylene sulfide is sufficiently compatibilized with polyphenylene ether, whereby the aforesaid problems are solved.

Thus, the present invention is a resin composition comprising a polyphenylene sulfide resin and a polyphenylene ether resin, characterized in that the resin composition contains:
(A) from 10 to 97 parts by weight of a polyphenylene sulfide resin,
(B) from 3 to 90 parts by weight of a polyphenylene ether resin or a combination of a polyphenylene ether resin and a polystyrene resin, and
(C) from 0.05 to 40 parts by weight of at least one unsaturated monomer having at least one oxazolinyl group, and/or at least one polymer having at least one oxazolinyl group,
the total of the components (A) and (B) being 100 parts by weight.

The polyphenylene sulfide resin used in the invention (hereinafter referred to as PPS) contains preferably at least 70 mole % of a structural unit represented by the general formula 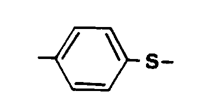 which then gives excellent properties to the composition. Methods of the polymerization for PPS include a method where p-dichlorobenzene is polymerized in the presence of sulfur and sodium carbonate, a method where polymerization is carried out in a polar solvent in the presence of sodium sulfide or sodium hydrosulfide and sodium hydroxide, or hydrogen sulfide and sodium hydroxide, a method where p-chlorothiophenol is self-condensed, and a preferred method where sodium sulfide is reacted with p-dichlorobenzene in an amide type solvent such as N-methyl pyrrolidone and dimethyl acetamide or a sulfone type solvent such as sulfolane. In these, it is preferred to add an alkali metal salt of carboxylic acid or sulfonic acid or alkali metal hydroxide in order to regulate a polymerization degree. As a copolymerized component, a meta bond 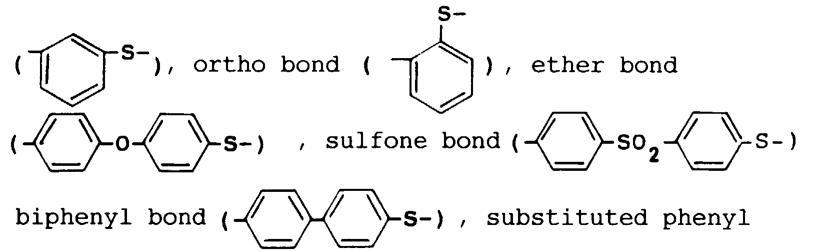 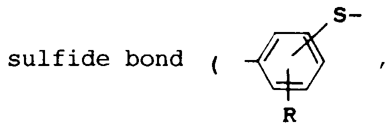 wherein R represents alkyl, nitro, phenyl, alkoxy, carboxylic acid or its metal salt group) and trifunctional phenyl sulfide bond 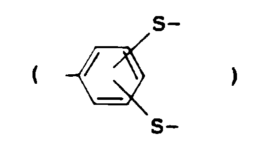 may be incorporated as far as crystallinity of the polymer is not greatly affected. However, the amount of the copolymerized components is preferrably 10 mole % at most. When tri- or more functional phenyl, biphenyl or naphthyl sulfide bond is particularly selected, 3 mole % or less is preferred with 1 mole % or less being more preferred.

Such PPS may be synthesized in a usual preparation process, such as (1) reaction of a halogen substituted aromatic compound with alkali sulfide (U.S. Patent 2,513,188, Japanese Patent Publications 27671/69 and 3368/70), (2) condensation reaction of thiophenols in the presence of alkali catalysts or cupper salts (U.S. Patent 3,274,165, U.K. Patent 1,160,660) and (3) condensation reaction of aromatic compounds in the coexistence of sulfur chloride and a Lewis acid catalyst (Japanese Patent Publication 27255/71, Belgian Patent 29437). These may be selected depending upon purposes.

PPS is now commercially available from several companies. There are various grades having different crosslinking densities and viscosities. PPS having less cross-linked structure is preferred in the present invention.

Polyphenylene ether resin (hereinafter referred to as PPE) is a generic name of polymers represented by the general formula: 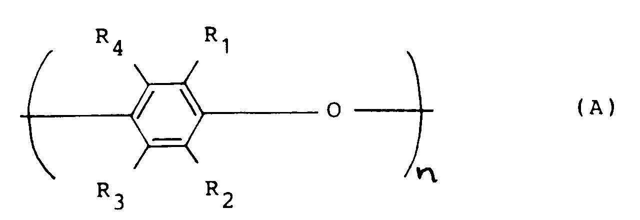 wherein R1, R2, R3 and R4 are a monovalent substituent selected from a hydrogen atom, a halogen atom, an alkyl group, an alkoxy group, a haloalkyl and haloalkoxy group in which at least 2 carbon atoms are present between a halogen atom and a phenyl ring with the exclusion of those having tertiary alpha-carbon atoms and n is an integer representing a degree of polymerization. The polymer may be a homopolymer or a copolymer of two or more comonomers represented by the above general formula. In preferred examples, R1 and R2 are an alkyl group of 1 to 4 carbon atoms, and R3 and R4 are a hydrogen atom or an alkyl group of 1 to 4 carbon atoms. For instance, there can be named poly(2,6-dimethyl-1,4-phenylene)ether, poly(2,6-diethyl-1,4-phenylene)ether, poly(2-methyl-6-ethyl-1,4-phenylene)ether, poly(2-methyl-6-propyl-1,4-phenylene)ether, poly(2,6-dipropyl-1,4-phenylene)ether and poly(2-ethyl-6-propyl-1,4-phenylene)ether. A typical polyphenylene ether copolymer is a copolymer in which a part of the aforesaid polyphenylene ether recurring unit is replaced with tri-alkyl substituted phenol, such as 2,3,6-trimethylphenol. Further, styrene type compounds may be grafted on these polyphenylene ethers to yield copolymers. Examples of the styrene type compound-grafted polyphenylene ethers are copolymers grafted with styrene, alpha-methyl styrene, vinyl toluene and chlorostyrene.

The polystyrene resin used in the present invention (hereinafter referred to as PS) is known per se and must contain at least 25 % by weight, based on the polymer, of recurring units derived from vinyl compounds represented by the general formula: 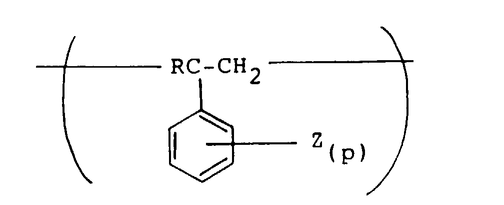 wherein R is a hydrogen atom or a C1 - C4 alkyl group, Z represents a substituent halogen or C1 - C4 alkyl group, and p is an integer from 0 to 5. Such styrene polymers include homopolymer of styrene or derivatives thereof; styrene polymers mixed or modified with natural or synthetic elastomers such as polybutadiene, polyisoprene, butyl rubber, EPDM, ethylene-propylene copolymers, natural rubber and epichlorohydrin; and styrene-containing copolymers such as styreneacrylonitrile copolymers (SAN), styrene-dutadiene copolymers, styrene-maleic anhydride copolymers and styreneacrylonitrile-butadiene copolymers (ABS). Styrene polymers preferably used in the invention are a styrene homopolymer and rubber-reinforced polystyrene. A ratio of the mixed styrene resin to the polyphenylene ether resin is preferably in a range where excellent properties of the polyphenylene ether resin are not damaged. Acordingly, preferred is a ratio of 20 to 100 parts by weight of PPE to O to 80 parts by weight of PS.

In the invention, the polyphenylene sulfide resin (A) and the polyphenylene ether resin or a combination of it with the polystyrene (B) are mixed with each other in a ratio of from 10 to 97 parts, preferably from 20 to 80 parts by weight, of (A) to 3 to 90 parts by weight, preferably 20 to 80 parts by weight, of (B). If PPS is less than the above limit, the properties of PPS are not exhibited, so that moldability, chemical resistance and so on are poor. On the other hand, if PPS is more than the above limit, the properties of PPE are not exhibited, which results in undesired brittleness and poor dimensional precision.

Component (C) used in the invention will be explained below.

Preferred unsaturated monomers with an oxazolinyl group include those represented by the general formula: 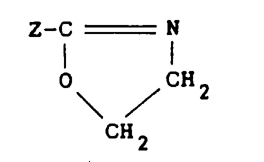 wherein Z is a substituent having a polymerizable double bond. Preferred substituent Z includes: 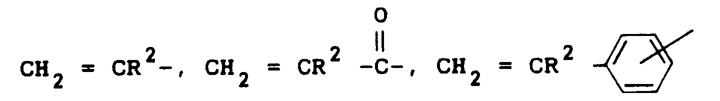 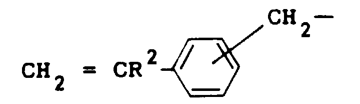 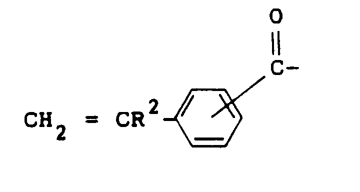 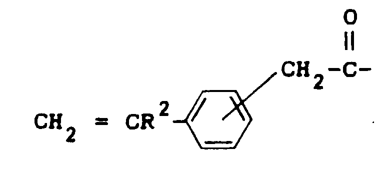 and

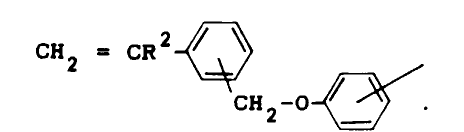

In these formulae, R2 is a hydrogen atom or an alkyl or alkoxyl group having 1 to 6 carbon atoms, such as methyl group, i- or n- propyl or butyl group.

A particularly preferred compound is vinyl oxazoline represented by the general formula: 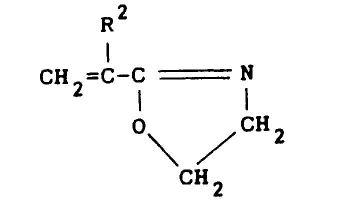 wherein R has the aforesaid meaning and is, preferably, a hydrogen atom or methyl group.

Polymers with at least one oxazolinyl group include homopolymers of the aforesaid unsaturated monomers, copolymers composed of two or more of the aforesaid unsaturated monomers, and copolymers composed of one or more of the aforesaid unsaturated monomers and other unsaturated monomer(s). The "other unsaturated monomers" include aromatic vinyl monomers such as styrene (hereinafter St); vinyl cyanide monomers such as acrylonitrile; unsaturated carboxylic acids or derivatives thereof such as vinyl acetate, acrylic acid and salts thereof, methacrylic acid and salts thereof, acrylic esters, methacrylic esters, maleic acid and its anhydride, maleic esters and 2-norbornene-5,6-dicarboxylic acid and its anhydride; alpha-olefines such as ethylene, propylene, 1-butene, 1-pentene, 4-methyl-1-pentene, 1-hexene, 1-octene, 1-decene, 1-tetradecene, 1-hexadecene, 1-octadecene and 1-eicosen; dienes such as butadiene, isoprene, 1,4-hexadiene, 5-ethylidene-2-norbornene and 5-vinyl-2-norbornene. Examples of the copolymers are vinyl oxazoline/St and vinyl oxazoline/MMA. Copolymers other than the aforesaid ones may also be used as a matter of course.

The polymeric component (C) according to the invention need not have a number of oxazolinyl groups. Although the invention is not restricted by any particular theory, the oxazolinyl group is thought to react with PPS. Component (C) having two or more of such groups may unite PPS with each other to make PPS more viscous, so that kneading of PPS with PPE may proceed very well. This is one explanation on the invention. In the case of the polymeric component (C), if such a polymer (or its structural component) is compatible with PPE, the polymer reacts meanwhile with PPS through the oxazolinyl group and, as a result, it is likely that the polymer compatibilizes PPE with PPS. In this case, it is acceptable in an extreme case that substantially one oxazolinyl group is introduced in the polymer.

It is preferred in the invention that component (C) be compatible with PPE. Examples of such component (C) are copolymers of unsaturated monomer(s) having an oxazolinyl group with styrene, such as CX-RPS-1005 (Nippon Catalyst Chemical Co., styrene polymer copolymerized with 5 wt. % of an oxazoline type monomer). To the end that a styrene type copolymer may be compatible with PPE, it is generally needed that the content of oxazolinyl group containing unsaturated monomers is in a rather small range, such as 30 % by weight or less. In concrete, this depends upon the kinds of unsaturated monomers. It may be judged by melt mixing the polymer of component (C) and PPE and examining a glass transition temperature (Tg) of the mixture whether the polymer is compatible with PPE or not. If compatible, only one glass transition temperature different from that of PPE is observed.

However, it should be noted that significant improvement on mechanical strength is recognized even with component (C) less compatible with PPE.

The amount of component (C) is from 0.05 to 40 parts by weight, preferably from 0.1 to 30 parts by weight, per 100 parts by weight of the total of (A) and (B). If the amount is less than this, the effects of the invention will not be sufficiently obtained.

On the other hand, if the amount is larger than this, heat resistance will lower. In the case where monomeric component (C) is used, the monomer reacts under heating, for instance, during melt mixing. It is undesirable that unreacted component (C) remains in a large amount. Accordingly, the amount of (C) is generally 10 parts by weight or less. In the case of using monomeric (C) it is preferred to use peroxide together.

All of the aforesaid compositions according to the invention may optionally contain a rubbery substance in an amount of 80 parts by weight or less, particularly 50 parts by weight or less, per 100 parts by weight of the total of PPS and PPE to further enhance impact resistance.

The rubbery material includes natural or synthetic polymeric material elastic at room temperature. Examples of such are natural rubber, butadiene polymer, styrene-isoprene copolymer, butadiene-styrene copolymer including random copolymer, block copolymer, graft copolymer and any other structures isoprene polymer, chlorobutadiene polymer, butadiene-acrylonitrile copolymer, isobutylene polymer, isobutylene-butadiene copolymer, isobutylene-isoprene copolymer, acrylic ester polymer, ethylene-propyrene copolymer, ethylene-propylene-diene copolymer, Thiokol rubber, polysulfide rubber, polyurethane rubber, polyether rubber such as polypropylene oxide, and epichlorohydrin rubber. These rubbery materials may be prepared by any known methods, such as emulsion polymerization or solution polymerization, using any known catalysts such as peroxides, trialkyl aluminium, lithium halide or nickel catalysts. The rubbery materials may have various degrees of crosslinking and various ratios among micro-structures such as cis, trans and vinyl. They may be particles of various average sizes. Further, the copolymers may be random copolymers, block copolymers or graft copolymers. The rubbery materlals may also be copolymers with other monomers such as olefines, dienes, aromatic vinyl compounds, acrylic acid, acrylic esters and methacrylic esters. These comonomers may be copolymerized in any manner of random copolymerization, block copolymerization or graft copolymerization. Examples of these monomers are ethylene, propylene, styrene, chlorostyrene, alphamethylstyrene, butadiene, isobutyrene, chlorobutadiene, butene, isobutylene, acrylic acid, methyl acrylate, ethyl acrylate, butyl acrylate, methyl methacrylate and acrylonitrile. Partially modified rubbery materials may also be used in the invention, such as polybutadiene having hydroxy- or carboxy- modified terminals, partially hydrogenated styrenebutadiene block copolymers, and partially hydrogenated styrene-isoprene block copolymers.

Further, as the rubbery material, there may be used styrene type elastomer such as copolymers, e.g. random, block or graft copolymers of vinyl aromatic compounds and conjugated dienes. Examples of these are hydrogenated or non-hydrogenated block copolymers represented by the formula A-B-A (wherein A is polystyrene and B is elastomeric dienes such as polybutadiene), radialterblock copolymer of styrene with conjugated dienes, acrylic resin-modified styrenebutadiene resins; and graft copolymers obtained by graft copolymerizing a monomer or monomer mixture containing styrenes as a major component to a rubbery polymer.

Further, to the resin composition according to the invention may be added other resins, additives such as pigments, dyes and reinforcing agents (e.g., glass fiber or carbon fiber), fillers such as carbon black, silica and titanium oxide, heat resisting agents, antioxidants, anti-aging agents, lubricants, releasing agents, nucleating agents, plasticizers, flame retardants, flow-improving agents and antistatics.

It is preferred to use a melt kneading process in preparing the composition of the invention. It is allowed to use a small amount of solvents, but this is not needed usually. As equipment used, extruders, banbury mixers, rollers and kneaders may be named in particular. These may be operated batchwise or continuously. The order of mixing is not particularly restricted. If a rubbery material is added, it is preferred to melt-knead the rubbery material and PPE in advance to thereby disperse the rubbery material in PPE.

The invention will be further explained with reference to the following Examples.

In Examples, unless otherwise stated, part and % are part by weight and percentage by weight, respectively.

### Example 1 and Comparison Examples 1 and 2.

In the Examples, Topren T4 (trade mark, Topren Co.) and Ryton M2588 (trade mark, Toray Phillips Petroleum Co.) were used as PPS.

Noryl (trade mark, GE Plastics Japan) was used as PPE. As component (C) the aforesaid CX-RPS-1005 (styrene copolymer with 5 wt. % oxazoline type monomer, Nippon Catalyst Chemical Co.) was used.

KRATON G 1651 (trade mark, SEBS rubber, Shell Chemical Co.) was used as an optional component.

PPE and KRATON G 1651 (KG 1651) of the amounts (parts by weight) indicated in Table 1 were extruded into pellets using a twin screw extruder at a temperature of 320°C and 290 rpm. This previous extrusion could well disperse KG 1651 in PPE. Then, the other components and the aforesaid pellets were extruded into pellets using a twin extruder at 300°C and 290 rpm. Test pieces for Izod impact tests were prepared from the pellets. The measurement results are summarized in Table 1.

**Table 1**

| | Comp.1 | Comp.2 | Ex.1 |
|---|---|---|---|
| PPE | 37.5 | 37.5 | 37.5 |
| KG1651 | 12.5 | 12.5 | 12.5 |
| Ryton M2588 | 50 | - | 50 |
| Topren T4 | - | 50 | - |
| CX-RPS-1005 | - | - | 5 |
| Impact strength w.no notch,Kg cm/cm | 35 | 38 | NB* |
| Impact strength w.no notch,Kg cm/cm | 2.4 | 2.2 | 14.2 |

| | | | |
|---|---|---|---|
| * NB: The test piece did not break | | | |

## Claims

1. A resin composition comprising a polyphenylene sulfide resin and a polyphenylene ether resin, characterized in that the resin composition contains
(A) from 10 to 97 parts by weight of a polyphenylene sulfide resin,
(B) from 3 to 90 parts by weight of a polyphenylene ether resin or a combination of a polyphenylene ether resin and a polystyrene resin, and
(C) from 0.05 to 40 parts by weight of at least one unsaturated monomer having at least one oxazolinyl group, and/or at least one polymer having at least one oxazolinyl group,
the total of the components (A) and (B) being 100 parts by weight.

2. The resin composition according to claim 1, wherein the polymer in the above (C)(a) is compatible with the polyphenylene ether resin.

3. The resin composition according to claim 1 or 2, wherein the amount of the polyphenylene sulfide resin (A) is from 20 to 80 parts by weight, the amount of the polyphenylene ether resin or the total of the polyphenylene ether resin and the polystyrene resin (B) is from 20 to 80 parts by weight, and said (B) consists of 20 to 100% by weight of the polyphenylene ether resin and 0 to 80% by weight of the polystyrene resin.

4. The resin composition according to claim 1, wherein a rubbery material is further contained.

## Patentansprüche

1. Harzzusammensetzung, bestehend aus einem Polyphenylensulfidharz und einem Polyphenylenätherharz, dadurch gekennzeichnet, daß die Harzzusammensetzung
(A) 10 bis 97 Gewichtsteile eines Polyphenylensulfidharzes,
(B) 3 bis 90 Gewichtsteile eines Polyphenylenätherharzes oder einer Kombination eines Polyphenylenätherharzes und eines Polystyrolharzes und
(C) 0,05 bis 40 Gewichtsteile mindestens eines ungesättigten Monomeren mit mindestens einer Oxazolinylgruppe und/oder mindestens eines Polymeren mit mindestens einer Oxazolinylgruppe
enthält, wobei die Summe der Komponenten (A) und (B) 100 Gewichtsteile beträgt.

2. Harzzusammensetzung nach Anspruch 1, in der das Polymere unter (C) mit dem Polyphenylenätherharz verträglich ist.

3. Harzzusammensetzung nach Anspruch 1 oder 2, in der die Menge des Polyphenylensulfidharzes (A) 20 bis 80 Gewichtsteile beträgt, die Menge des Polyphenylenätherharzes oder die Summe des Polyphenylenätherharzes und des Polystyrolharzes (B) 20 bis 80 Gewichtsteile beträgt und (B) aus 20 bis 100 Gewichtsprozent Polyphenylenätherharz und 0 bis 80 Gewichtsprozent Polystyrolharz besteht.

4. Harzzusammensetzung nach Anspruch 1, in der weiter ein Gummimaterial enthalten ist.

## Revendications

1. Composition de résine, comprenant une résine polyphénylènesulfide et une résine éther polyphénylénique, caractérisée en ce que la composition de résine contient
(A) de 10 à 97 parties en poids d'une résine polyphénylènesulfide,
(B) de 3 à 90 parties en poids d'une résine éther polyphénylénique ou d'une combinaison d'une résine éther polyphénylénique et d'une résine polystyrénique et
(C) de 0,05 à 40 parties en poids d'au moins un monomère non-saturé ayant au moins un groupe oxazolinyle et/ou au moins un polymère ayant au moins un groupe oxazolinyle, le total des composants (A) und (B) étant 100 parties en poids.

2. Composition de résine selon la revendication 1, dans laquelle le polymère mentionné sous (C) est compatible avec la résine éther polyphénylénique.

3. Composition de résine selon la revendication 1 ou 2, dans laquelle la quantité de la résine polyphénylènesulfide (A) est de 20 à 80 parties en poids, la quantité de la résine éther polyphénylénique ou le total de la résine éther polyphénylénique et de la résine polystyrénique (B) est de 20 à 80 parties en poids et ladite (B) se compose de 20 à 100 pour cent en poids de la résine éther polyphénylénique et de 0 à 80 pour cent en poids de la résine polystyrénique.

4. Composition de résine selon la revendication 1, dans laquelle est également contenue une matière de caoutchouc.
